# EUROPÄISCHE PATENTSCHRIFT

(11) **EP 0 528 109 B1**
(45) Veröffentlichungstag und Bekanntmachung des Hinweises auf die Patenterteilung: **26.10.1994**
(21) Anmeldenummer: 92107481.1
(22) Anmeldetag: 02.05.1992
(51) Int. Cl.: B29C 47/68, B29C 45/24, B01D 35/12

(54) **Filtereinrichtung für Strangpressen und Spritzgiessmaschinen**
Filtering apparatus for extruders and injection machines
Dispositif de filtrage pour extrudeuses et machines d'injection

(30) Priorität: 08.08.1991 DE 9109829 U; 09.09.1991 DE 4129905
(43) Veröffentlichungstag der Anmeldung: 24.02.1993
(73) Patentinhaber: KREYENBORG VERWALTUNGEN UND BETEILIGUNGEN KG, D-48061 Münster (DE)
(72) Erfinder: Kreyenborg, Jan-Udo, W-4400 Münster (DE)
(74) Vertreter: Habbel, Hans-Georg, Dipl.-Ing.

(56) Entgegenhaltungen:
- EP-A- 0 250 695
- DE-A- 1 800 169
- DE-B- 2 153 962
- DE-C- 4 012 404
- DE-U- 9 105 000
- PATENT ABSTRACTS OF JAPAN vol. 12, no. 302 (M-732)(3149) 17. August 1988 & JP-A-63 78 726 ( MITSUBISHI PLASTICS IND LTD ) 8. April 1988

## Beschreibung

Die Erfindung bezieht sich auf eine Filtereinrichtung gemäß dem Oberbegriff des Hauptanspruches.

Eine gattungsbildende Einrichtung wird in der DE-B2-18 00 169 beschrieben, und diese bekannte Einrichtung erfüllt die Aufgabe, ein Auswechseln von verschmutzter oder beschädigter Siebe zu ermöglichen, ohne daß ein Abreißen des kontinuierlich fließenden Materialstroms erfolgt.

Diese bekannte Einrichtung hat aber den Nachteil, daß beim Anfahren der Einrichtung noch nicht ganz aufgeschmolzener Kunststoff zuerst das Sieb erreicht und es teilweise oder ganz zusetzt. Hierdurch können ganz erhebliche Drucksteigerungen entstehen, die Schäden an der Maschine oder am Siebgewebe verursachen. Außerdem ist die Qualität des anfangs austretenden Kunststoffstranges sehr unterschiedlich, was Schwierigkeiten bei der Weiterverarbeitung nach sich ziehen kann.

Der Erfindung liegt die Aufgabe zugrunde, die gattungsbildende und sich in der Praxis ausgezeichnet bewährte Einrichtung so weiterzubilden, daß der Siebträger in eine sogenannte Anfahrstellung geführt werden kann, in der der noch nicht ganz aufgeschmolzene Kunststoff sofort wieder ohne Zutritt zum Sieb aus der den Siebträger aufnehmenden Bohrung geführt werden kann, wobei die Anordnung möglichst kostengünstig ausgebildet sein soll.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, daß bei einer Einrichtung, bei der zwei Siebträgerbolzen in einem Gehäuse angeordnet sind, so vorgegangen wird, daß jeder Siebträgerbolzen an seiner Außenseite am Umfang einen Hilfskanal aufweist. Dieser Hilfskanal kann durch Verstellen des Siebträgers vor die Mündung des Eintrittskanals bzw. der mit dem Eintrittskanal in Verbindung stehenden Teilkanäle verfahren werden, so daß nunmehr vom Eintrittskanal aus über die Teilkanäle das erste Kunststoffmaterial dem Hilfskanal zugeführt wird. Aus diesem Hilfskanal wird das Material dann nach außen abgeführt, entweder dadurch, daß es unmittelbar vom Hilfskanal aus nach außen gelangt oder indem im Gehäuse Kanäle vorgesehen sind, die zu sogenannten Abfuhröffnungen führen. Auf jeden Fall wird durch diese Anordnung erreicht, daß ein problemloses Abführen des ersten Kunststoffmaterials möglich ist und daß außerdem in dieser Stellung des Siebträgers das eigentliche Sieb auch ausgewechselt werden kann.

Ein Ausführungsbeispiel der Erfindung wird nachfolgend anhand der Zeichnung erläutert. Die Zeichnung zeigt in
- Fig. 1: einen Siebträgerbolzen mit zugeordneter Verstelleinrichtung außerhalb des Gehäuses, in
- Fig. 2: den Siebträgerbolzen innerhalb des ihn aufnehmenden Gehäuses in der sogenannten Siebstellung, d. h. das eigentliche Sieb steht mit dem Eintrittskanal in Verbindung und in
- Fig. 3: den Siebträgerbolzen in einer Stellung, die der Anfahrstellung entspricht.

In der Zeichnung ist mit 1 ein Gehäuse bezeichnet, in dem zwei Gehäusebohrungen 2 vorgesehen sind. Die beiden Gehäusebohrungen 2 nehmen je einen runden Siebträgerbolzen 3 auf, der eine Siebbohrung 8 besitzt, die ein Sieb 4 in an sich bekannter Weise aufnehmen kann.

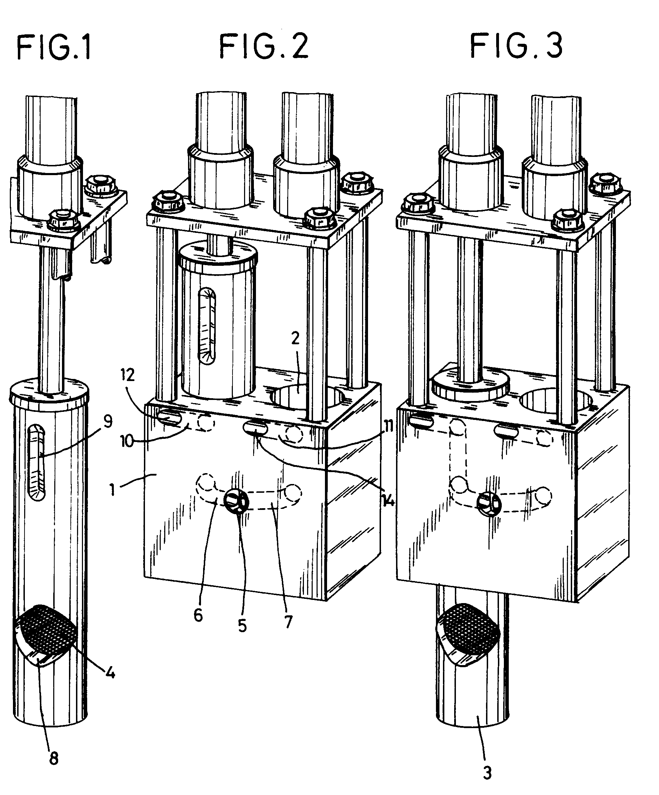

Im Gehäuse 1 ist in Fig. 2 und 3 ein Eintrittskanal 5 erkennbar. An diesen Eintrittskanal 5 schließen sich Teilkanäle 6 und 7 an, die bei der Stellung des Siebträgerbolzens 3 in der in Fig. 2 dargestellten Arbeitsstellung mit der Siebbohrung 8 in Verbindung kommen. Auf der Rückseite des Gehäuses sind aus der Zeichnung nicht erkennbare Teilkanäle ebenfalls vorgesehen, die zu einer Austrittsöffnung führen, die in der Zeichnung ebenfalls nicht erkennbar ist.

In dem Siebträgerbolzen 3 ist an seiner Außenwandung am Umfang ein Hilfskanal 9 vorgesehen, der im Abstand von der Siebbohrung 8 liegt, so daß es, wie dies die Fig. 3 zeigt, möglich ist, durch Verstellen des Siebträgerbolzens 3 nunmehr das eine Ende des Hilfskanales 9 beispielsweise mit der gehäuseseitigen Mündung des Teilkanales 6 in Verbindung zu bringen, wobei das andere Ende des Hilfskanales 9 mit der gehäuseseitigen Mündung eines Kanales 10 in Verbindung steht, der zu einer Abfuhröffnung 12 im Gehäuse führt. In gleicher Weise ist dem Teilkanal 7 ein Kanal 11 zugeordnet, der mit einer Abfuhröffnung 14 in Verbindung steht.

Fig. 3 macht deutlich, daß in dieser Stellung des Siebträgerbolzens 3 das eigentliche Sieb 4 aus dem Gehäuse herausgefahren ist, also gereinigt oder gewechselt werden kann.

## Patentansprüche

1. Filtereinrichtung für Strangpressen und Spritzgießmaschinen zur kontinuierlichen Verarbeitung von thermoplastischen Kunststoffen mit in mindestens zwei getrennten Teilkanälen (6, 7) zwischen dem Eintrittskanal (5) und dem Austrittskanal eines Gehäuses (1) auswechselbar angeordneten Sieben (4), die in mindestens zwei in Gehäusebohrungen (2) dichtend aber verschiebbar gelagerten, im Querschnitt runden Siebträgerbolzen (3) angeordnet sind, dadurch gekennzeichnet, daß in den Siebträgerbolzen (3) im Abstand von den die Siebe (4) aufnehmenden Siebbohrungen (8) je ein zur Außenseite am Umfang des Siebträgerbolzens (3) offener Hilfskanal (9) vorgesehen ist, der in einer Anfahrstellung des Siebträgerbolzens (3) die siebträgerseitige Mündung des zugeordneten Teilkanales (6, 7) des Eintrittskanales (5) mit einer nach außen führenden Abfuhröffnung (12, 14) verbindet.

2. Vorrichtung nach Anspruch 1, dadurch gekennzeichnet, daß der Hilfskanal (9) bis zum freien Ende des Siebträgerbolzens (3) geführt ist und hier gleichzeitig die Abfuhröffnung bildet.

3. Einrichtung nach Anspruch 1, dadurch gekennzeichnet, daß in dem Gehäuse (1) jeder einen Siebträgerbolzen (3) aufnehmenden Gehäusebohrung (2) ein zu der nach außen führenden Abfuhröffnung (12, 14) führender Kanal (10, 11) zugeordnet ist.

## Claims

1. A filter apparatus for extrusion and injection moulding machines for the continuous processing of thermoplastic plastics, comprising sieves (4) arranged replaceably in at least two separate partial channels (6, 7) between the inlet channel (5) and the outlet channel of a housing (1), which sieves (4) are arranged in at least two cross-sectionally round sieve-carrying bolts (3) mounted sealingly but displaceably in housing bores (2), characterized in that in each of the sieve-carrying bolts (3) at a distance from the sieve bores (8) accommodating the sieves (4) there is provided an auxiliary channel (9) open towards the outside at the periphery of the sieve-carrying bolt (3), which auxiliary channel (9), when the sieve-carrying bolt (3) is in a starting position, connects the opening, on the sieve-carrying side, of the associated partial channel (6, 7) of the inlet channel (5) with an outward-leading delivery opening (12, 14).

2. A device according to claim 1, characterized in that the auxiliary channel (9) is guided as far as the free end of the sieve-carrying bolt (3) and there simultaneously forms the delivery opening.

3. An apparatus according to claim 1, characterized in that a channel (10) leading to the outward-leading delivery opening (12, 14) is assigned to the housing (1) of each housing bore (2) accommodating a sieve-carrying bolt (3).

## Revendications

1. Dispositif de filtrage pour les extrudeuses et les machines de moulage par injection pour le traitement continu de matières thermoplastiques avec des cribles (4) disposés de façon interchangeable dans au moins deux canaux partiels (6, 7) séparés entre le canal d'entrée (5) et le canal de sortie d'un boîtier (1), qui sont disposés dans au moins deux boulons porte-crible (3) de section ronde supportés de façon étanche mais coulissante dans des alésages (2) du boîtier, caractérisé en ce qu'il est prévu dans chacun des boulons porte-crible (3) à distance des alésages pour crible (8) recevant les cribles (4) un canal auxiliaire (9) ouvert vers l'extérieur sur la circonférence du boulon porte-crible (3), lequel canal relie dans une position de démarrage du boulon porte-crible (3) l'embouchure située du côté du porte-crible du canal partiel (6, 7) correspondant du canal d'entrée (5) avec une ouverture d'évacuation (12, 14) menant vers l'extérieur.

2. Dispositif selon la revendication 1, caractérisé en ce que le canal auxiliaire (9) s'étend jusqu'à l'extrémité libre du boulon porte-crible (3) et y forme en même temps l'ouverture d'évacuation.

3. Dispositif selon la revendication 1, caractérisé en ce que dans le boîtier (1), un canal (10, 11) qui s'étend vers l'ouverture d'évacuation (12, 14) menant vers l'extérieur est associé à chaque alésage de boîtier (2) recevant un boulon porte-crible (3).
